# EUROPEAN PATENT APPLICATION

(11) **EP 1 947 726 A1**
(43) Date of publication of application: **23.07.2008**
(21) Application number: 07100679.5
(22) Date of filing: 17.01.2007
(51) Int. Cl.: H01M 8/24, H01M 8/08

(54) **Fuel cell manifold**

(71) Applicant: E-VISION BVBA, 2370 Arendonk (BE)
(72) Inventor: Spaepen, Jef, B-2460, Kasterlee (BE); Bols, Leo, B-3900, Overpelt (BE); Geenen, Johan, B-2400, Mol (BE)
(74) Representative: pronovem

(57) **Abstract**

The present invention is related to a manifold for a fuel cell system having two opposite faces arranged for the mounting of fuel cell stacks thereto. The manifold comprises a manifold body and passages within said body for the flow of liquids therethrough. The manifold is characterised in that at least one pair of said passages comprise ports arranged for the direct coupling of a valve onto the manifold body. Said valve provides a fluid communication between said pair of passages. The manifold may comprise two manifold bodies, which are arranged one above another and at a distance from each other, thereby creating an open volume in between the two manifold bodies, that may accept peripheral devices.

## Description

### Field of the Invention

The present invention is related to a manifold for a fuel cell system. More particularly, the present invention is related to a manifold facilitating the assembly of fuel cell stacks and peripheral devices.

### State of the Art

A fuel cell is an electrochemical device in which a fuel (typically hydrogen) and an oxidant (typically oxygen or air) are consumed in order to generate electrical energy. The hydrogen and the air are consumed in respectively an oxidation and a reduction reaction. The oxidation of hydrogen gas is catalysed by an anodic electrode. For the particular case of an alkali hydrogen fuel cell, the hydrogen oxidation reaction proceeds according to the following formula:

*H*₂ *+* 2*OH*⁻ → 2*H₂*O + 2*e⁻.*

The hydroxyl ion is produced by the reduction of oxygen at a cathodic electrode according to:

*½ O₂* + *H*₂*O +* 2*e⁻ →* 2*OH⁻*

and is transferred from cathode to anode by an electrolyte (typically *KOH ).* In another type of hydrogen fuel cell, the so-called "proton exchange membrane" (PEM) fuel cell, the oxidation and reduction reactions produce and consume hydrogen protons that are transferred from anode to cathode through a solid electrolyte (the exchange membrane), acting simultaneously as an electronic insulator.

Water and heat are by-products of the reactions occurring in the fuel cell. An external electrical circuit withdraws electrical energy from the fuel cell. In order to generate a sufficient amount of power, multiple single fuel cell elements are stacked to form what is usually referred to as a fuel cell stack. A stack comprises the necessary channels to supply hydrogen, oxygen/air and electrolyte to all elements. The length of a stack - and thus the number of elements - is limited due to the necessity of equally distributing the hydrogen and oxygen gasses over all elements.

Therefore, current fuel cell systems that generate a useful amount of electrical power (on the order of e.g. 6 kW) comprise multiple stacks (e.g. 4 for the 6 kW case). A quite extensive amount of piping is required to connect all stacks to the hydrogen, oxygen and electrolyte supplies and to peripheral devices such as sensors and heat exchangers. This extensive piping work makes assembly difficult, and places an undue burden on maintenance and substitution by spare parts.

The use of manifolds to reduce the piping around fuel cell stacks is known from patent document US 6110612. The document discloses one central manifold system to which four PEM-type fuel cell stacks can be mounted, two at each side, in a symmetrical configuration. The manifold provides inlets and outlets through which fuel, air and coolant are supplied to and withdrawn from the stacks. The manifold also provides ports for coupling with external supplies.

Patent document US 6875535 discloses a one-stack manifold providing a first type of access ports for connecting to the fuel cell stack, and a second type for connecting to fuel cell peripherals, such as temperature and pressure sensors for operation monitoring. Patent document WO 03/007414 discloses a manifold system having one front plate for connecting to a fuel cell stack and an opposite plate for connecting to fuel cell peripherals, such as humidifiers and heat exchangers.

The above mentioned prior art documents all disclose manifolds for connecting to PEM-type fuel cell stacks, which use demineralised water as reaction water. Therefore, it is common to use stainless steel as material for the manifold. The fuel and air gasses need to be humidified before being supplied in order to keep the proton exchange membrane wet.

Additionally, the above mentioned manifolds are 'single-block' systems. Internal to the manifold, useful space is left unused and peripheral components are mounted at the manifold's periphery.

Alkali fuel cells which use a liquid electrolyte such as KOH, operate at significantly lower temperatures. The material requirements are less stringent with reference to the temperature resistance, but these materials however have to be able to withstand the particularly corrosive action of an electrolyte such as *KOH.*

### Aims of the Invention

The present invention aims to provide a very compact manifold for a fuel cell system, enabling an easy assembly and easy maintenance operations. The present invention equally aims to provide a manifold with reduced internal and external piping constituting an improvement over the prior art.

### Summary of the Invention

The present invention is related to a manifold for a fuel cell system as set out in the appended claims. According to a main aspect of the present invention, there is provided a manifold for a fuel cell system having two opposite faces arranged for the mounting of fuel cell stacks thereto. Said manifold comprises a manifold body and passages within said body for the flow of liquids therethrough. The manifold of the invention is characterised in that at least one pair of said passages comprise ports arranged for the direct coupling of a valve. Said valve provides a fluid communication between said pair of passages.

In a preferred embodiment, the manifold is arranged for direct coupling of a cartridge type valve. More preferably, there is provided a manifold for a fuel cell system comprising at least one valve mounted directly onto the manifold body. Preferably, the manifold comprises at least one cartridge type valve mounted directly onto the manifold body.

The manifold of the invention may comprise one single manifold body. According to an alternative embodiment of the invention, the manifold comprises two manifold bodies. Said two manifold bodies are arranged one above another and at a distance from each other, thereby creating an open volume in between the two manifold bodies. The manifold is preferably arranged for the coupling of peripheral devices thereto in said open volume.

The manifold according to the different embodiments of the present invention may be used in an alkali fuel cell apparatus comprising a plurality of fuel cell stacks mounted to the manifold. The working fluids of the fuel cell apparatus are liquid electrolyte, an oxygen-rich gas (e.g. air) and a hydrogen-rich gas (i.e. the fuel). The fuel cell apparatus may comprise:
- the manifold according to the present invention,
- a plurality of fuel cell stacks mounted and coupled to the manifold and
- at least one valve mounted to the manifold.
Preferably, the fuel cell apparatus further comprises one or more of the following:
- at least one pressure sensor mounted to the manifold,
- at least one temperature sensor mounted to the manifold,
- a circulation pump mounted to the manifold,
- a heat exchanger mounted to said manifold and
- an electrolyte storage tank in connection with the manifold.

### Brief Description of the Drawings

Figure 1 represents a fuel cell system with four fuel cell stacks and a manifold.

Figure 2 represents the supply block component of the manifold body.

Figure 3 represents the collector block component of the manifold body.

Figure 4 represents three views of the supply block visualising the internal air/oxygen channels.

Figure 5 represents three views of the supply block visualising the internal hydrogen channels.

Figure 6 represents three views of the supply block visualising the internal electrolyte channels.

Figure 7 represents three views of the collector block visualising the internal air/oxygen channels.

Figure 8 represents three views of the collector block visualising the internal hydrogen channels.

Figure 9 represents three views of the collector block visualising the internal electrolyte channels.

Figures 10 and 11 represent the manifold according to the present invention comprising peripheral devices and valves.

### Detailed Description of the Invention

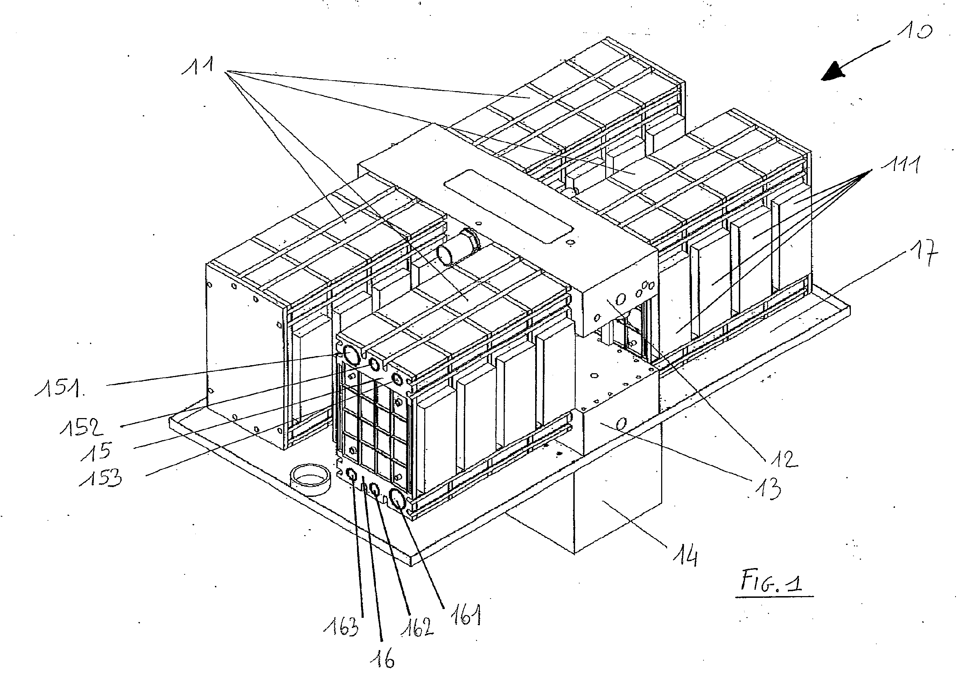

The manifold according to the present invention allows an even number of stacks, preferably four, to be connected to it in a symmetrical configuration. The manifold has two opposite faces for mounting the stacks. These faces are provided with ports for coupling to the stacks. Figure 1 represents a fuel cell system 10 with four stacks 11 coupled to a manifold of the invention. Each of the stacks 11 may consist of one or more substacks 111.

According to one embodiment of the invention, the manifold comprises a supply block 12 and a collector block 13. As can be seen from figure 1, the supply and collector block are offset from each other. The result is that in between the two blocks an otherwise dead volume is made available. This volume is used for mounting peripheral components and hence further compact the whole system. The two-block configuration is made possible by grouping the distribution channels of the fuel cell stacks at the top 15 and bottom 16 of each stack.

The manifold of the present invention is arranged for direct coupling of peripheral components thereto. Peripheral components comprise temperature and pressure sensors, pumps, ventilators and heat exchangers. In contrast with manifolds of the prior art, the present manifold is also arranged for direct coupling of valves thereto. The valves close off and open fluid passages within the body of the manifold.

The illustration of figure 1 is representative of an alkali fuel cell system using *KOH* as electrolyte. The concept of the manifold according to the present invention however, may equally be applied to PEM and other types of fuel cells. Alkali fuel cell systems operate at relatively low temperatures of about 70°C. Nevertheless, a certain amount of cooling is necessary for keeping the operating conditions stationary. The alkali fuel cell system according to the present embodiment of the invention employs the liquid electrolyte KOH also as coolant. Referring to figure 1, there is provided a storage tank 14 for the electrolyte. The electrolyte is withdrawn from this tank and circulates through the stacks. A basin 17 is provided under the manifold and the stacks for collecting spilt electrolyte, e.g. during maintenance operations.

At the top and bottom of each stack, three distribution channels are provided: one for the fuel (hydrogen or a hydrogen-rich gas), one for the air or an oxygen-rich gas and one for the coolant/electrolyte. The distribution channels 151 and 161 for the air or oxygen-rich gas have a larger cross sectional area than the other two types. The distribution channels 153 and 163 for the hydrogen are provided at an end, opposite to the air distribution channels. Interposed between the air and fuel channels is the distribution channel for the electrolyte 152 and 162.

Channel 151 at the top supplies air to the fuel cell elements within the stack, while channel 161 acts as collector for unused reagents and reaction products such as water vapour. The electrolyte circulates in a forced loop through channels 152 and 162. Its direction of flow is however opposite to the direction of flow of the air. Hence, channel 162 is the supply channel for the electrolyte in the stack, and channel 152 is a collector channel. This counterflow enables to achieve a more effective cooling. As will be explained further in this text, the fuel (hydrogen) runs serially through all stacks; its direction of flow is also reversed on a regular basis.

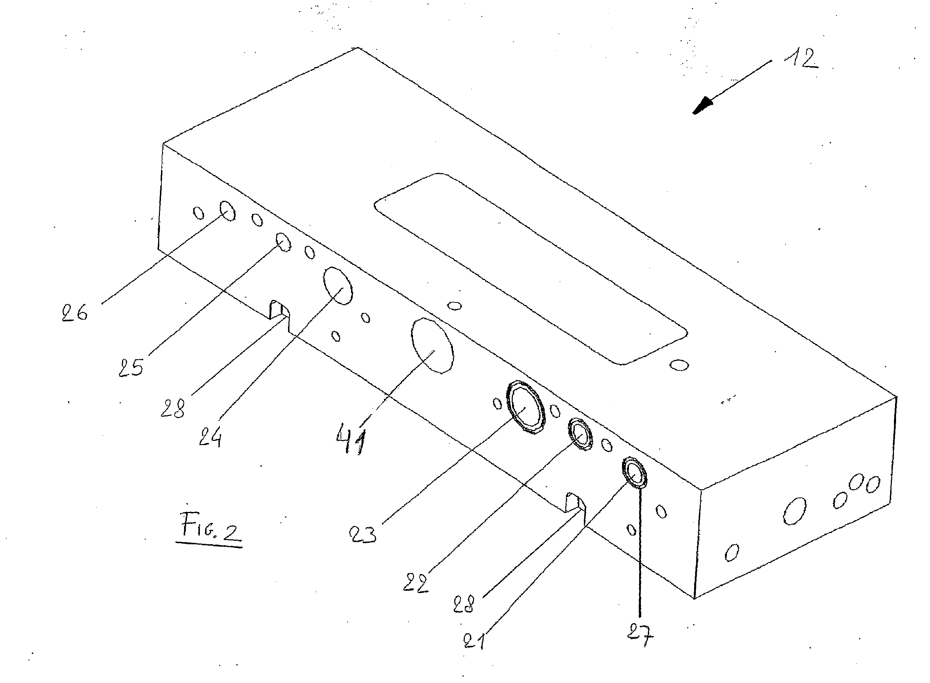

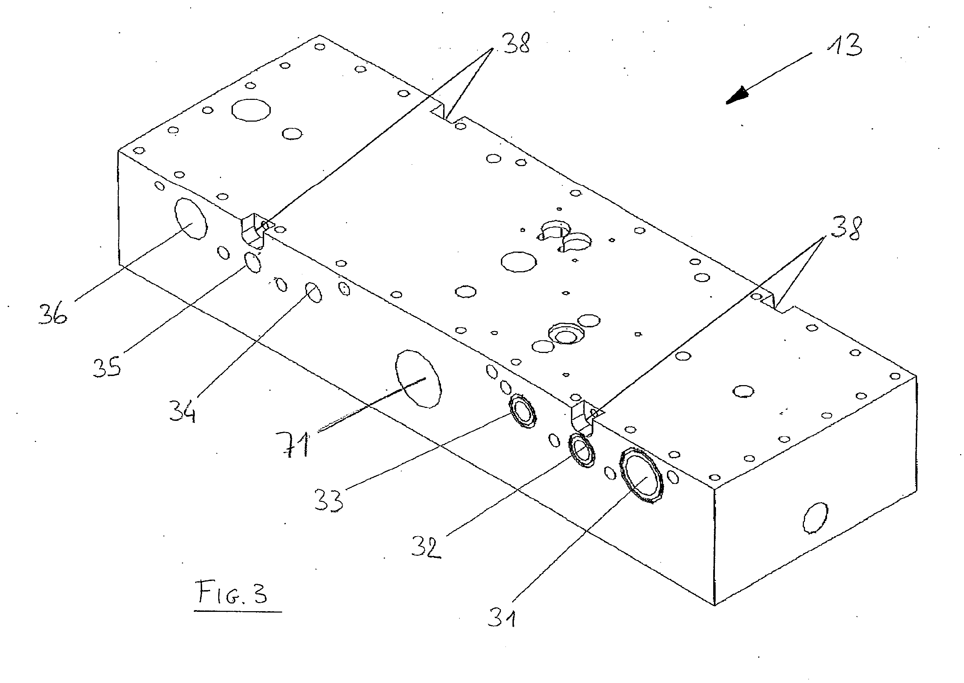

Figures 2 and 3 illustrate respectively the supply 12 and collector block 13 of the manifold. In the configuration as illustrated, the manifold is designed for connecting to four fuel cell stacks (two at each face). Referring to figure 2, visualised are air/oxygen supply ports 23 and 24, hydrogen ports 21 and 26, and electrolyte collector ports 22 and 25. At the opposite face of the block (not visualised in the figure), a symmetrical port configuration is provided. Each of the abovementioned ports features a groove 27 around the passage for accepting an O-ring (sealing ring). Referring to figure 3, visualised are air collector ports 31 and 36, hydrogen ports 33 and 34, and electrolyte supply ports 32 and 35. Here too, a symmetrical port configuration is provided at the opposite face of the block.

Referring to figure 1, the configuration of the bottom channels 161-163 within a stack is inversed with reference to the configuration of the top channels 151-153. Channels 151 and 161 carrying air are positioned diagonally opposite to each other. The same holds for hydrogen channels 153 and 163. Referring to figures 2 and 3, two stacks mounted next to each other, at the same side of the manifold feature a symmetrical configuration of distribution channels. Likewise, two stacks mounted in front of each other feature a symmetrical configuration of distribution channels. The present configuration eases the manufacture of the channels within the manifold blocks. As a consequence, the four stacks in the present fuel cell system are two by two symmetrical opposites of each other.

Within the body of the manifold there are provided fluid passages between the supply and exhaust ports of the fluids (air/oxygen, hydrogen, KOH) to and out of the manifold and the distribution ports e.g. 21, 22, 23, 24, 25, 26, 31, 32, 33, 34, 35, 36. A number of these fluid passages (channels) can be closed off by a valve. The manifold according to the present invention is arranged for direct coupling of valves to the body of the manifold.

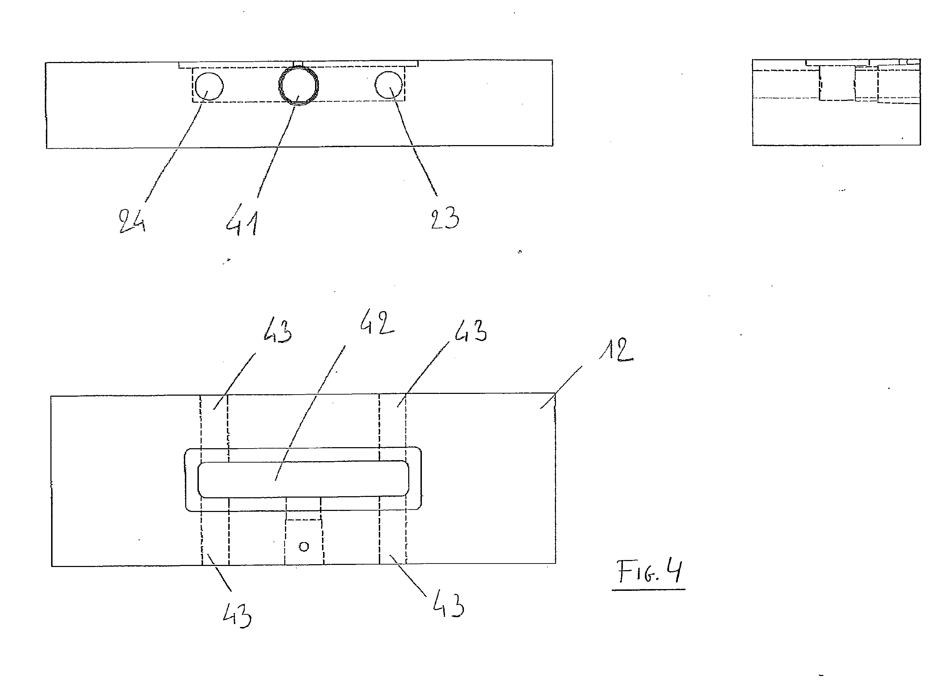

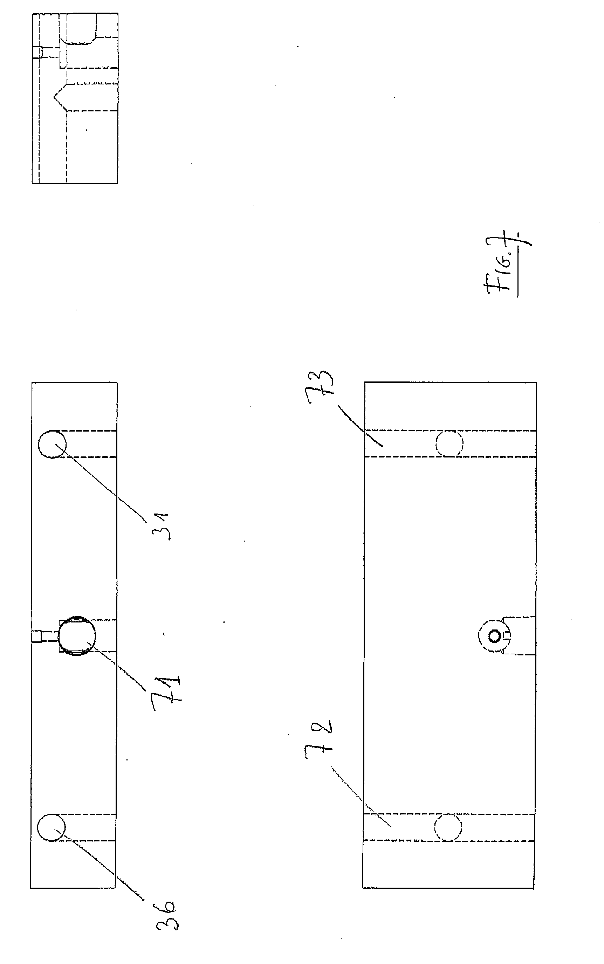

The channels providing a fluid passage within the manifold body are visualised in figures 4-9. Figures 4-6 refer to the supply block 12, while figures 7-9 refer to the collector block 13. Figure 4 visualises the air/oxygen supply channels internal to supply block 12. Port 41 is the air/oxygen supply port, through which the air is brought into distribution chamber 42. The distribution chamber allows an equal distribution of the air over the channels 43 that supply the stacks. The air collector channels are provided internally to collector block 13 and are visualised in figure 7. The exhaust air and water vapour flows through ports such as 31 and 36 into collector channels 72 and 73 which deviate the fluid mixture into electrolyte storage tank 14 and from there to the exhaust port 71.

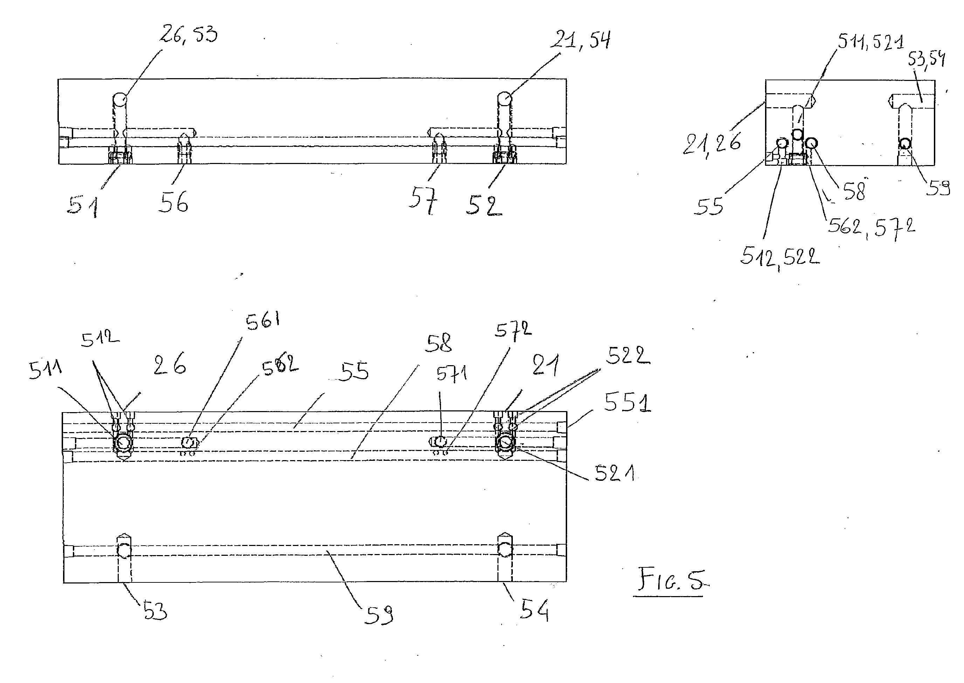

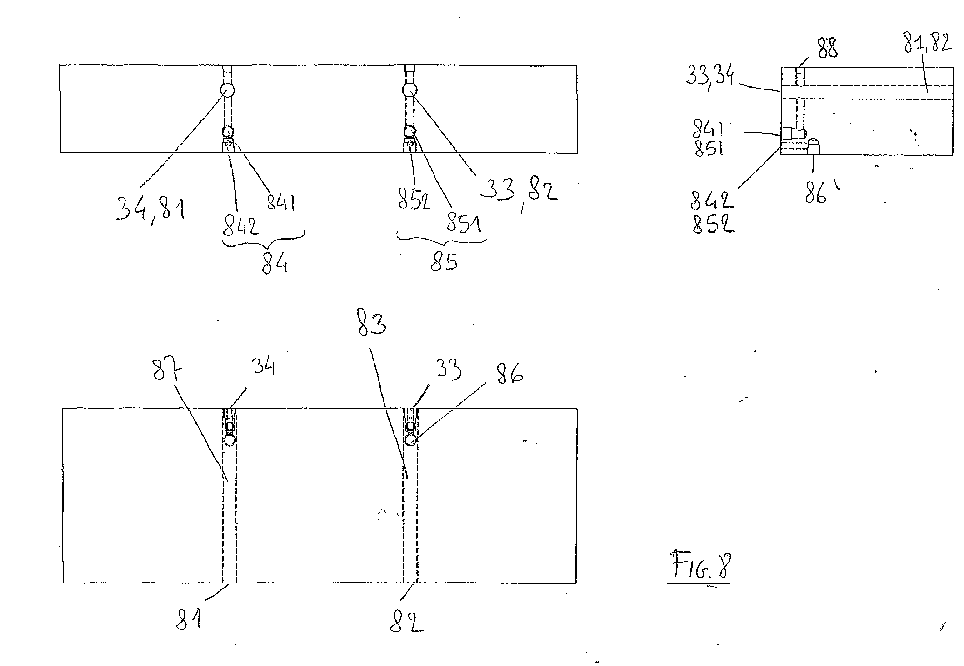

Figure 5 visualises the hydrogen channels internal to supply block 12 and figure 8 visualises the hydrogen channels internal to collector block 13. Hydrogen is supplied to the fuel cell system through port 551 from where the hydrogen enters channel 55. The other end of channel 55 is closed (not shown). Channel 55 is connected with smaller channels 512 and 522 which abut at the underside of the block, at ports respectively 51 and 52. Ports 51 and 52 are arranged for accepting valves which provide a passage between channels 512 and 522 and channels 511 and 521 respectively. Channels 511 and 521 in turn provide a fluid passage to ports 26 and 21 respectively, to each of which a stack is coupled.

The hydrogen is made to flow serially through the stacks. In order to achieve this, only one of both ports 51 and 52 is open, while the other is kept closed by the valve. Let the valve mounted at port 51 be closed and the valve mounted at port 52 be open. Hence, there is a fluid passage between channels 521 and 522, but no passage between channels 511 and 512. The hydrogen that is supplied by channel 55 then is directed to port 21 which provides a passage to the stack coupled thereto. The hydrogen flows through the stack through channels 153 and 163 consecutively and enters the collector block at port 33. Referring to figure 8, channel 83 directs the hydrogen from port 33 towards port 82 at the opposite face, where it enters the stack coupled thereto. In this stack, the hydrogen flows in an opposite direction with reference to the previous stack. Hence, the hydrogen flows first through channel 163 and subsequently through channel 153 from where it reaches port 54 of the supply block (see fig. 5). Channel 59 directs the hydrogen then to port 53 after which it enters the third stack. This stack is traversed by the hydrogen in the direction of channel 153 first and 163 subsequently. Thereafter, the hydrogen appears at port 81 of the collector block. Channel 87 brings the hydrogen to port 34, after which it enters the last of four stacks. Finally, the hydrogen appears at port 26 of the supply block. Every stack consumes part of the hydrogen that flows through it. The totality of the fuel cells consume all the supplied hydrogen. Hence, under normal operating conditions no outlet for the hydrogen is required. The hydrogen can equally be made to flow through the fuel cell system in the inverse direction. In this case, the valve at port 52 is closed and the valve at port 51 is open. Inversion of the hydrogen flow on a regular basis increases the lifetime of the fuel cell stacks.

The hydrogen conduit of the fuel cell system according to the present invention is provided with a purge system and a drainage system. The purge system is clear from figure 5, where ports 56 and 57 are arranged to accept purge valves. These valves open and close a fluid passage between channels 561 and 562 at port 56 and 571 and 572 at port 57. In the case that the inlet valve at port 52 is open and the valve at port 51 is closed a purge can be performed by opening the purge valve at port 56. The hydrogen in this case flows from channel 55 consecutively through ports 21, 33, 82, 54, 53, 81, 34 and 26 and traverses all stacks. At port 26 the hydrogen enters again the supply block. As the purge valve at port 56 is open, the hydrogen flows from channel 561 into channels 562 and thereafter into channel 58, which provides an outlet for the hydrogen carrying the purged impurities. In the case that the inlet valve at port 51 is open and the inlet valve at port 52 is closed, a purge can be accomplished by opening the purge valve at port 57, while keeping the purge valve at port 56 closed.

Referring to figure 8, ports 84 and 85 are arranged for accepting a drainage valve. Ports 841 and 851 constitute the inlet of the drainage valves; ports 842 and 852 the outlets. When one or both of the drainage valves are open, the hydrogen conduit can be drained, as a fluid passage is provided between channels 87 and 83 and ports 841 and 851 respectively.

In order for the hydrogen to flow serially through all the stacks, only one inlet valve is open at a time. The same applies to the purge and drainage valves. Referring to figure 5, channels 512 and 522 constitute the inlets of the hydrogen inlet valves; channels 511 and 521 the outlets. Channels 561 and 571 constitute the inlets of the purge valves; channels 562 and 572 the outlets.

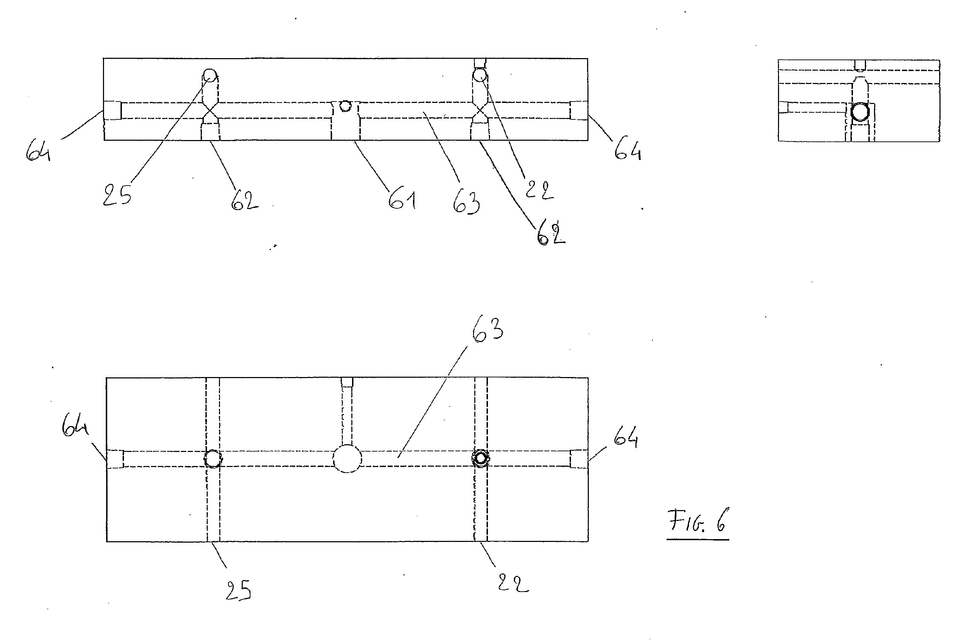

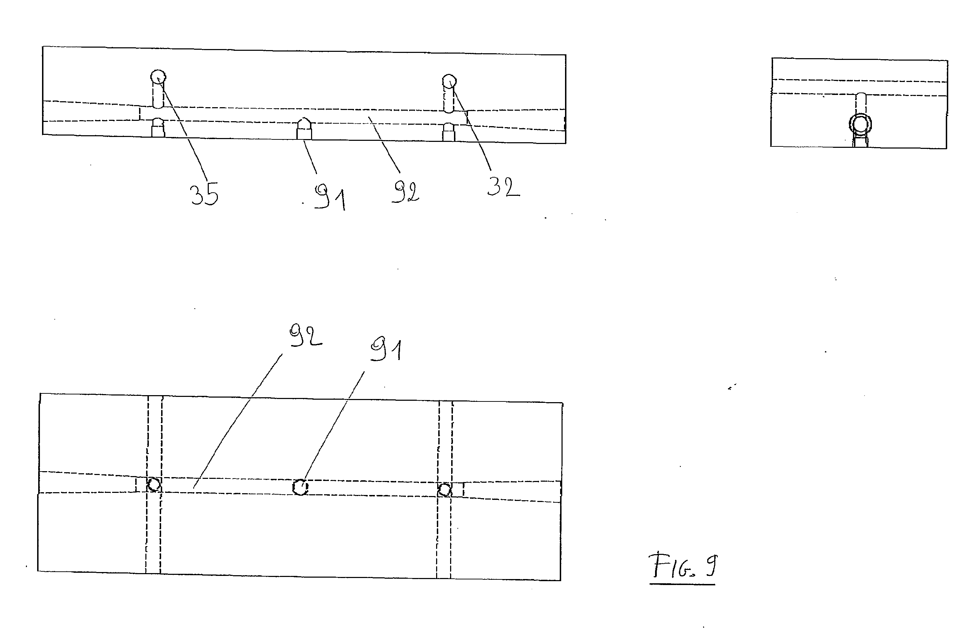

Figures 6 and 9 visualise the channels for the electrolyte internal to respectively the supply block 12 and collector block 13. As mentioned above, the electrolyte (KOH in the present embodiment) flows through the stacks in opposite direction with respect to the air/oxygen. Therefore, the *KOH* is fed to the stacks through collector block 13. The *KOH* is pumped from storage tank 14 into the manifold through port 91, from where it is distributed by channel 92 to the supply ports such as 32 and 35 to which the stacks are coupled. The electrolyte then flows through channels 162 and 152 within the stacks and enters the manifold again through ports 22 and 25. Channel 63 in the supply block (see fig. 6) provides a fluid communication between the collector ports 22 and 25 of the electrolyte. Ports 62 are closed off.

The electrolyte is also used as coolant. During flow through the stacks, the electrolyte draws away heat. This heat is withdrawn from the electrolyte by a heat exchanger which is coupled to port 61 of the manifold. Electrolyte flowing out of the heat exchanger is fed back to the supply tank.

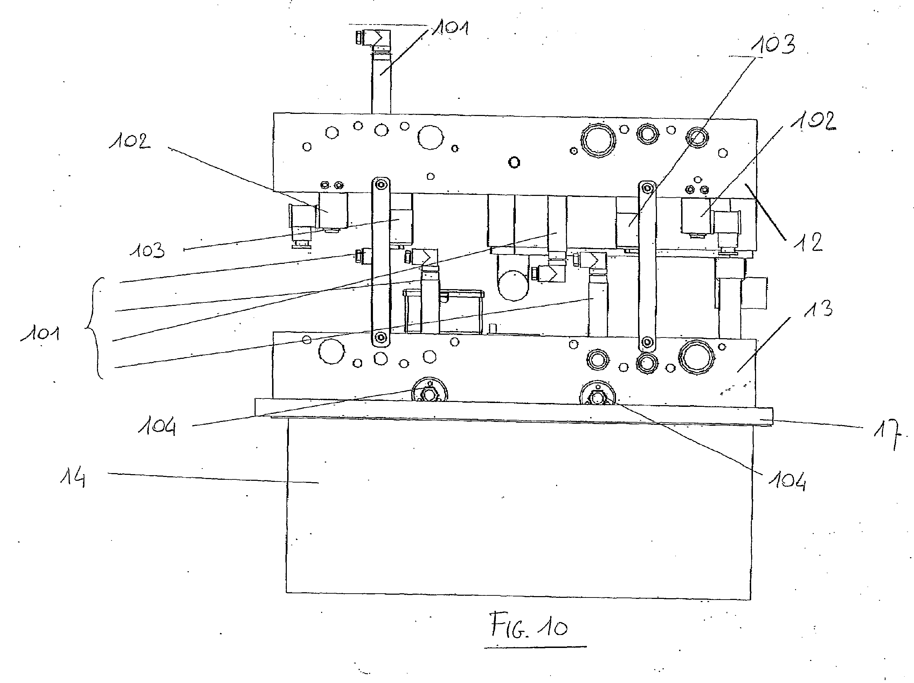

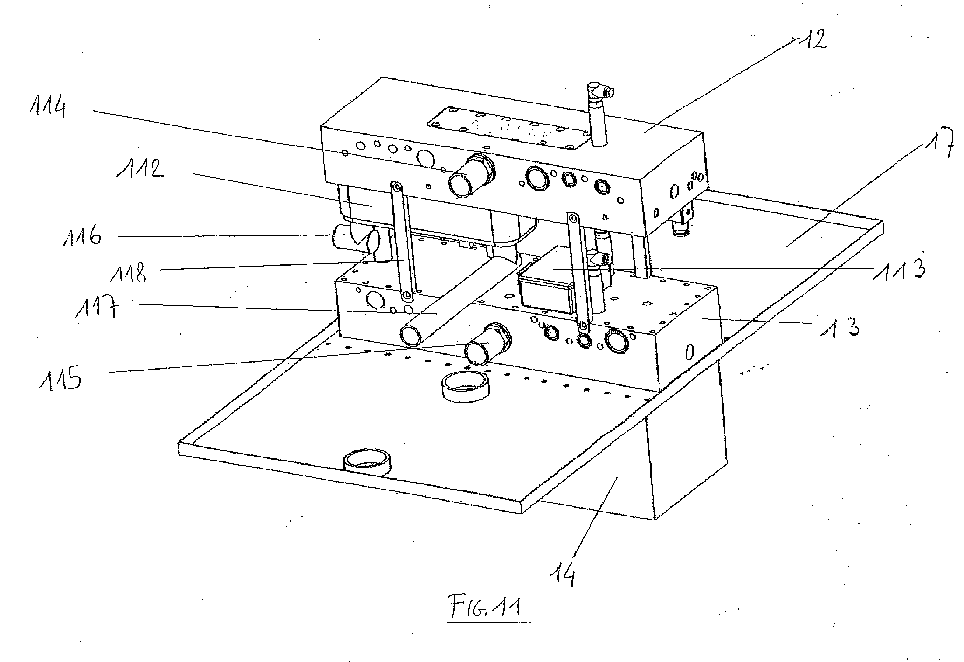

A number of peripheral components which the manifold is arranged to accept have already been mentioned, such as the valves and the heat exchanger. Figures 10 and 11 show the various peripheral components mounted directly onto the manifold. These peripheral components comprise pressure sensors 101, temperature sensors, valves 102, 103 and 104, heat exchanger 112 and pump 113. Pressure and temperature sensors monitor the operating conditions of the fuel cell system. Such pressure sensors can be mounted e.g. at ports 88 in figure 8 so as to be in communication with one of the fluids. Heat exchanger 112 and pump 113 are used for the electrolyte loop. The electrolyte circulates in a forced loop through the stacks and fuel cell elements. The forced flow of electrolyte is maintained by pump 113, which takes KOH from tank 14. The pump may be an external device that is mounted onto the manifold. Alternatively, the pump may be integrated into the manifold: the housing for the pump may be formed integrally in the manifold such that only a rotor needs to be mounted onto the manifold. Heat exchanger 112 is coupled to port 61 (see fig. 6) of the manifold and withdraws heat from the electrolyte. A secondary fluid is used for the exchange of heat. Fittings 116 and 117 on fig. 11 provide respectively the in- and outlet of this fluid to/out of the heat exchanger.

The manifold according to the present invention features dedicated ports for the mounting of valves. The valves control the hydrogen flow. Referring to figure 10, valves 102 are the hydrogen inlet valves and are coupled to ports 51 and 52 of the manifold. Valves 103 are purge valves for purging the hydrogen channels and are coupled to ports 56 and 57 of the manifold. Valves 104 are drain valves for the hydrogen channels and are coupled to ports 84 and 85 of the manifold. The hydrogen channels need to be purged in order to drain the impurities that are comprised in the hydrogen and build up in the conduits. Draining of the hydrogen loops purges electrolyte that leaked into the hydrogen conduits. In order to prevent hydrogen entering the electrolyte conduits, the pressure of the electrolyte is maintained slightly above the pressure of the hydrogen. As a consequence small infiltrations of electrolyte into the hydrogen conduits are possible. Additionally, the conduits carrying the other fluids may be equipped with valves too.

A number of valve mounting configurations are envisaged in the present invention. In a first embodiment, the valve comprises valve and seat, and the manifold provides an inlet and an outlet port to which the valve is directly connected. In an alternative embodiment the valve seat is incorporated into the manifold as an integral part of it. The external valve, comprising motor and piston is then mounted onto its corresponding seat. This latter type of valve is generally referred to as a cartridge valve.

Now that the various components of the fuel cell system have been outlined, the sequence for assembly of the fuel cell system is readily deduced. The peripheral components are first mounted onto the manifold. Additional to the peripheral components already mentioned, fittings such as 114 and 115 (see fig. 11) for the air in- and outlet are also mounted onto the manifold. The supply block 12 is subsequently mounted above the collector block 13 and kept at the right height by rods 118 depicted on figure 11. The ends of rods 118 fit in grooves 28 and 38 of the supply and collector block respectively, as shown in figs. 2 and 3. Hence the rods do not extend out of the manifold's front and back face so as not to interfere with stack mounting. Alternatively, the rods can be replaced by stack end plates. The manifold is mounted on table 17, below which electrolyte storage tank 14 is provided. At this stage, the different stacks can be easily connected to the manifold. Finally, for operation, the manifold is connected to the air and hydrogen supplies. Components and fuel cell are externally electrically connected. Such an assembly also allows a very easy access to the fuel cell stacks and peripherals in case of maintenance or spare parts substitution.

The manifold blocks may be manufactured by drilling and milling the internal channels. Apertures that are not used, such as 64 on fig. 6 are closed subsequently. Alternatively, the manifold body may be injection moulded, or manufactured with other appropriate techniques. The manifold may be made of a metal, such as stainless steel, or of a plastic material. A plastic material that is resistant against KOH and particularly suitable for the present manifold is acetal polyoxymethylene copolymer (POM). As an alternative ABS, or polypropylene may be employed too.

## Claims

1. A manifold for a fuel cell system (10) having two opposite faces arranged for mounting fuel cell stacks (11) thereto and comprising a manifold body (12,13) and passages (43,55,63,73,83) within the body for the flow of fluids therethrough, **characterised in that** at least one pair of passages (511,512) comprise ports (51) arranged for direct coupling of a valve, said valve providing a fluid communication between said pair of passages.

2. The manifold according to claim 1, wherein at least one of said ports (51,52) for direct coupling of a valve is arranged for accepting a cartridge type valve comprising a piston, said piston opening or closing a fluid passage within the manifold body.

3. The manifold according to claim 1 or 2, comprising at least one valve (102,103) mounted directly onto the manifold body.

4. The manifold according to any one of the preceding claims, wherein the manifold further comprises:
- a first manifold body (12) interposed between said opposite faces and comprising passages within the body providing fluid communication between ports (21, 22, 23, 24, 25, 26) for coupling to the fuel cell stacks and further comprising ports (41, 61) for coupling to peripheral devices (112),
- a second manifold body (13) interposed between said opposite faces and comprising passages within the body providing fluid communication between ports (31, 32, 33, 34, 35, 36) for coupling to the fuel cell stacks and further comprising ports (91) for coupling to peripheral (113) devices and
said first and second manifold bodies are arranged one above another and at a distance from each other thereby creating an open volume in between said first and second bodies.

5. The manifold according to claim 4, arranged for mounting at least one of said fuel cell peripheral devices in the open volume between the first and second manifold body, said peripheral devices comprising said valves.

6. The manifold according to claim 4 or 5, wherein said fuel cell peripheral devices comprise a circulation pump (113).

7. The manifold according to any one of the claims 4 to 6, wherein said fuel cell peripheral devices comprise a heat exchanger (112).

8. The manifold according to any one of the claims 4 to 7, wherein the manifold body is made from a material selected from the group consisting of: acetal polyoxymethylene copolymer, acrylonitrile butadiene styrene (ABS), polypropylene and stainless steel.

9. Use of the manifold as defined in any one of the preceding claims in an alkali fuel cell apparatus comprising four fuel cell stacks (11) and using a liquid electrolyte, an oxygen-rich gas and a hydrogen-rich gas.

10. The use according to claim 9, of the manifold as defined in claim 4, wherein:
- the first manifold body (12) distributes air and fuel to the fuel cell stacks (11) and evacuates the electrolyte from the fuel cell stacks and
- the second manifold body (13) distributes electrolyte to the fuel cell stacks (11) and evacuates air from the fuel cell stacks.

11. The use according to claim 9 or 10, wherein the manifold ports (22,25,32,35) for passage of electrolyte to and from the fuel cell stacks are interposed between the manifold ports for the passage of air (23,24,31,36) and fuel (21,26,33,34).

12. The use according to any one of the claims 9 to 11 in an arrangement with four fuel cell stacks mounted two-by-two at opposite faces of the manifold, wherein the passages of fuel and air (34,36) between the manifold and a fuel cell stack are configured symmetrically opposite compared to said passages (33,31) of the neighbouring fuel cell stack mounted at the same face of the manifold.

13. The use according to any one of the claims 9 to 12 in an arrangement with four fuel cell stacks mounted two-by-two at opposite faces of the manifold, wherein the passages of fuel and air (21,23) between the manifold and a first fuel cell stack are configured symmetrically compared to the said passages (54) of a second fuel cell stack mounted in front of said first fuel cell stack, at the other face of the manifold.

14. A fuel cell apparatus comprising:
- the manifold as defined in any one of claims 1 to 8,
- a plurality of fuel cell stacks (11) mounted and coupled to said manifold and
- at least one valve (102) mounted to said manifold.
